# EUROPÄISCHE PATENTSCHRIFT

(11) **EP 3 972 854 B1**
(45) Veröffentlichungstag und Bekanntmachung des Hinweises auf die Patenterteilung: **30.11.2022**
(21) Anmeldenummer: 20727257.6
(22) Anmeldetag: 19.05.2020
(51) Int. Cl.: B60B 9/16, B60B 17/00

(54) **MEHRTEILIGES SCHIENENRAD FÜR EIN SCHIENENFAHRZEUG**
MULTIPART RAIL WHEEL FOR A RAIL VEHICLE
ROUE FERROVIAIRE EN PLUSIEURS PARTIES POUR UN VÉHICULE SUR RAILS

(30) Priorität: 22.05.2019 DE 102019113624
(43) Veröffentlichungstag der Anmeldung: 30.03.2022
(73) Patentinhaber: Bochumer Verein Verkehrstechnik GmbH, 44793 Bochum (DE)
(72) Erfinder: MURAWA, Franz, 44805 Bochum (DE)
(74) Vertreter: Cohausz & Florack
(86) Internationale Anmeldenummer: PCT/EP2020/063939
(87) Internationale Veröffentlichungsnummer: WO 2020/234286

(56) Entgegenhaltungen:
- DE-A1- 2 324 060
- DE-A1- 19 536 149
- DE-B1- 2 246 580
- DE-C2- 19 633 597
- DE-U1- 9 319 845

## Beschreibung

Die Erfindung betrifft ein Schienenrad für ein Schienenfahrzeug, das aus einem Radreifen, einem Radinnenteil und mindestens einem zwischen dem Radreifen und dem Radinnenteil angeordneten, elektrisch isolierend wirkenden elastischen Körper zusammengesetzt ist, über den der Radreifen auf dem Radinnenteil abgestützt ist. Um trotz der durch den elastischen Körper bewirkten elektrischen Trennung eine elektrische Verbindung zwischen dem Radinnenteil und dem Radreifen herzustellen, ist an einer außen liegenden Stirnseite des Schienenrads eine Strombrücke befestigt, die ein erstes Kontaktelement, das aus einem elektrisch leitfähigen Material besteht und mit einer Kontaktfläche am Radreifen anliegt, ein zweites Kontaktelement, das aus einem elektrisch leitfähigen Material besteht und mit seiner Kontaktfläche am Radinnenteil anliegt, und einen die Kontaktelemente verbindenden elektrischen Leiter umfasst. Für die Erfindung von besonderer Bedeutung ist dabei, dass das Radinnenteil mindestens in dem Bereich, in dem das dem Radinnenteil zugeordnete Kontaktelement der Strombrücke mit seiner Kontaktfläche an dem Radinnenteil anliegt, aus einem Leichtmetallwerkstoff besteht.

Mehrteilige Schienenräder der hier in Rede stehenden Art, in der Fachsprache auch "gummigefederte Schienenräder" genannt, werden vorzugsweise bei Schienenfahrzeugen des öffentlichen Nahverkehrs eingesetzt. Standardmäßig bestehen diese Räder aus einem Innenteil, das aus Radnabe, Radscheibe und Radfelge zusammengesetzt ist, die jeweils aus einem Stahlwerkstoff mit geeignetem Eigenschaftsprofil hergestellt sind, sowie einem Radreifen, der aus verschleißfestem Stahl besteht. Durch den mindestens einen zwischen dem Innenteil und dem Radreifen angeordneten elastischen Körper ist der Radreifen elastisch auf dem Radinnenteil abgefedert, so dass hochfrequente Vibrationen oder andere Schwingungen, die im Fahrbetrieb durch das Abrollen des Radreifens auf der Schiene angeregt werden, allenfalls gedämpft auf das Radinnenteil und das mit ihm verbundene Fahrwerk des Schienenfahrzeugs übertragen werden. In der Regel wird dabei der Radreifen nicht nur mittels eines einzigen elastischen Körpers auf dem Radinnenteil abgestützt, sondern es ist eine Vielzahl von solchen Körpern vorgesehen, die in gleichmäßigen Winkelabständen um die Drehachse des Schienenrades verteilt in dem Spalt zwischen dem Radreifen und dem Radinnenteil angeordnet sind. Auf diese Weise ist die Montage eines solchen Schienenrades vereinfacht.

Aufgrund der schlechten elektrischen Leitfähigkeit der für den oder die elastischen Körper eingesetzten Gummimischungen sind der Radreifen und das Radinnenteil gegeneinander elektrisch isoliert. Bei im Nahverkehr eingesetzten elektrischen Bahnen haben die Schienenräder jedoch häufig neben ihrer Aufgabe das Fahrzeug sicher zu tragen, im Gleis zu führen und die Antriebs-und Bremsmomente auf das Gleis zu bringen, auch die Funktion den Stromkreis mit dem über die Oberleitung eingeleiteten Fahrstroms zu schließen und auf die Schiene als Rückleiter zu leiten.

Nahverkehrs-Schienenfahrzeuge weisen je nach Fahrzeugkonzept sechs bis zehn Radsätze mit jeweils zwei Schienenrädern auf und werden im Allgemeinen mit Gleichstrom betrieben. Die Spannung beträgt typischerweise 600 - 750 V. Der gesamte Fahrstrom liegt je nach Motorleistung und Anzahl der angetriebenen Radsätze im Bereich von 600 - 1000 A. Bei einer ideal gleichmäßig auf die Schienenräder verteilten Übertragung des Fahrstroms zur Schiene würde im Fahrbetrieb somit typischerweise pro Rad ein Strom von beispielsweise 75 A fließen.

Ungünstige Kontaktbedingungen zwischen Schiene und Rad oder zwischen den Einzelteilen des Rades können jedoch dazu führen, dass der vom Schienenfahrzeug aufgenommene Fahrstrom nicht von allen Rädern des Schienenfahrzeugs gleichermaßen, sondern im Extremfall sogar nur von einem einzelnen Rad übertragen wird. Solche Fälle können beispielsweise nach einer Starkbremsung auftreten, wenn auf der Schiene zur Erhöhung der Reibung ausgebrachter Bremssand liegt, der den elektrischen Stromfluss behindert. Um auch in solchen Situationen sicherzustellen, dass ein für den Antrieb des Fahrzeugs ausreichender Strom fließen kann, erfolgt die Auslegung der Schienenräder üblicherweise so, dass dauerhaft mindestens ein Strom von 500 A pro Rad übertragen werden kann.

Zusätzliche Anforderungen an den elektrischen Kontakt zwischen Schiene und Rad einerseits und den einzelnen Komponenten des Schienenrades andererseits ergeben sich daraus, dass Schienenräder und Schienen in modernen Fahrleitsystemen zur Signalübertragung Vom Schienenfahrzeug an Steuereinrichtungen am Gleis oder zu einer zentralen Leitstelle genutzt werden. So werden beispielsweise über den elektrischen Kontakt zwischen Rad und Schiene elektrische Schaltimpulse für Weichen- und Signalsteuerungen, Gleisfreimeldesysteme und desgleichen vom Fahrzeug in die Schiene eingeleitet. Um dies zu bewerkstelligen, muss auf dem Weg vom Fahrzeug zur Schiene ein sehr niedriger Übergangswiderstand eingehalten werden.

Die maximalen elektrischen Übergangswiderstände, die ein Radsatz aufweisen darf, sind in der EN 13260 festgelegt. Sie betragen im Neuzustand eines Radsatzes nur 0,01 Ohm bei einer Prüfspannung von 1,8 - 2,0 V Gleichstrom. Gemäß EN 15313 darf der Übergangswiderstand im Betrieb 0,1 Ohm nicht überschreiten.

Bei gummigefederten Schienenrädern der hier in Rede stehenden Art kann diese Anforderung nur erfüllt werden, indem der Radreifen durch mindestens eine gesondert an dem Schienenrad montierte Strombrücke elektrisch an das Radinnenteil angebunden wird. Die Strombrücke muss dabei so verformbar ausgelegt sein, dass sie die Federeigenschaften des Rades nicht beeinflusst.

Erforderlichenfalls werden zwei oder mehrere Strombrücken an einem Schienenrad montiert, um beispielsweise eine sichere Übertragung der hohen Ströme oder eine zuverlässige Signalübertragung zu gewährleisten.

Die Strombrücken bestehen jeweils aus sehr gut elektrisch leitenden Kupferlitzen, welche in einer heute üblichen Ausgestaltung an beiden Enden jeweils ein Kontaktelement in Form eines Kabelschuhs aufweisen, der gemäß der DIN-Norm 46235 gestaltet ist. Diese Kontaktelemente werden in der Regel an einer der Stirnseiten von Radreifen und Radfelge verschraubt.

Eine Alternative stellen so genannte "innenliegende Strombrücken" dar. Hierbei handelt es sich um Strombrücken, die in den elastischen Elementen eines Schienenrads der hier in Rede stehenden Art integriert sind. Sie bestehen aus Kontakttellern aus Messinggewebe, die durch die Druckvorspannung der Gummifedern gegen Radreifen und Radfelge gedrückt gehalten werden, und einem konventionellen Kabel, das beide Kontaktteller verbindet. Eine solche Ausgestaltung einer Strombrücke ist beispielsweise in der DE 22 46 580 B2 beschrieben.

Eine weitere Möglichkeit einer Überbrückung der durch die elastischen Elemente gebildeten Isolierung zwischen Radreifen und Radinnenteil besteht darin, jeweils ein Kontaktblech aus verzinnten Kupferblechen zwischen den elastischen Elementen und dem Radreifen einerseits und den elastischen Elementen und dem Radinnenteil andererseits anzuordnen und beide Kontaktbleche durch eine Kupferlitze zu verbinden, wie in der DE 10 44 145 B beschrieben.

Bei den heute in der Praxis zur Übertragung von Fahr- und Signalströmen eingesetzten Strombrücken für Schienenrädern werden die Kontaktelemente, über die die Strombrücke mit dem Radinnenteil und dem Radreifen elektrisch angekoppelt sind, aufgrund der guten elektrischen Leitfähigkeit üblicherweise aus Kupferwerkstoff hergestellt. Zur Verbesserung ihrer Oxidationsbeständigkeit können die Kontaktelemente mit einem Zinnüberzug versehen sein. Der elektrische Leiter der Strombrücke ist üblicherweise ein konventionelles Kupferkabel, das von einer elektrisch isolierenden Kunststoffummantelung ausreichender Dicke umgeben ist.

Der Radreifen moderner gummigefederter Schienenräder, wie sie beispielsweise in der DE 196 33 597 C2 beschrieben sind, besteht typischerweise aus einem hochbelastbaren Stahl, der dem Radreifen eine ausreichende Beständigkeit gegen abrasiven Verschleiß verleiht und gleichzeitig mit der Lauffläche der Schiene eine Reibpaarung eingeht, die eine sichere Übertragung der Antriebskräfte gewährleistet. Dabei sitzt die Strombrücke mit ihrem Kontaktelement direkt auf dem Stahl des Radreifens. Genauso sitzt das andere Kontaktelement auf der Außenseite des zugeordneten Abschnitts des Radinnenteils und hat dabei direkten Kontakt zu dem Werkstoff, aus dem dieser Abschnitt hergestellt ist.

Diese Anordnung kann insbesondere dann, wenn der betreffende Abschnitt des Radinnenteils aus einem Leichtmetallwerkstoff besteht, zu Problemen führen. Solche Probleme ergeben sich daraus, dass die elektrische Verbindung neben der Belastung durch die Stromübertragung selbst zusätzlich durch Umgebungsmedien beeinflusst wird. So sind die Kontaktstellen zwischen den Kontaktelementen der Strombrücke und dem Radreifen sowie dem Radinnenteil durch Feuchtigkeit, insbesondere Spritzwasser, das sich bei Regen oder Schnee einstellt, belastet. Besonders kritisch erweist sich dies in Jahreszeiten oder unter klimatischen Bedingungen, bei denen die Feuchtigkeit in Kombination mit Salz oder desgleichen gleichzeitig auftritt, wie es beispielsweise im Winter oder in Gegenden nahe eines Meeres vorkommt. Insbesondere in diesem Fall wirkt die Feuchtigkeit zwischen den miteinander in elektrischen Kontakt stehenden Bauteilen dann wie ein Elektrolyt.

Bekannt ist, dass sich bei Bauteilen aus Metallwerkstoffen mit unterschiedlicher Stellung in der elektrochemischen Spannungsreihe bei gleichzeitiger Benetzung mit einem Elektrolyten eine Potenzialdifferenz ausbildet, welche zur anodischen Auflösung des jeweils "unedleren" Metalls führt. Bei den Strombrücken von konventionellen gummigefederten Schienenrädern ist eine solche Materialpaarung im Bereich des Kontakts zwischen den aus Stahl bestehenden Radreifen und Radinnenteil und den aus Kupfer bestehenden Kontaktelementen der Strombrücke gegeben. Wirkt im Bereich eines derartigen Kontakts beispielsweise Regenwasser als Elektrolyt und sind die Kontaktelemente in üblicher Weise zum Schutz gegen Korrosion verzinnt, so liegt folgende elektrochemische Paarung vor:

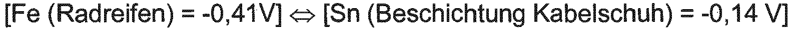

Im Fall eines direkten Kontakts zwischen einem unverzinnten, aus Kupferwerkstoff bestehenden Kontaktelement und dem aus Stahl bestehenden Radreifen gilt

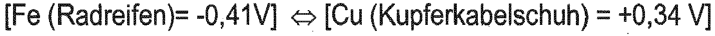

Demnach beträgt die Spannungsdifferenz bei vorhandener Zinnschicht 0,27 V und bei einem direkten Kontakt des Kupfers des Kontaktelements mit dem Stahl des Radreifens 0,75 V.

Praktische Erfahrungen zeigen, dass Kontaktkorrosion auftreten kann, wenn zwischen den Materialien, aus denen die miteinander in Kontakt kommenden Bauteile hergestellt sind, eine Potenzialdifferenz von min. 100 mV besteht. Durch die Verwendung elektrisch leitender Fette, wie beispielsweise Fette auf Aluminium Compound-Basis, kann im Kontaktbereich der Zutritt von Elektrolyten weitgehend unterbunden werden, so dass sich bei einer Kombination eines verzinnten Kupferkabelschuhs mit den aus Stahl bestehenden Bauteilen eines mehrteiligen Schienenrads erfahrungsgemäß keine Korrosion einstellt.

Anders liegt der Fall, wenn, wie in der WO 2018/046745 A1 beschrieben, die mit dem Kontaktelement einer Strombrücke in elektrischem Kontakt kommende Komponente des Radinnenteils aus einem Leichtmetallwerkstoff gefertigt ist. So ergibt sich bei Einsatz eines verzinnten Kontaktelements an einem aus einem Aluminiumwerkstoff bestehenden Bauteil des Radinnenteils 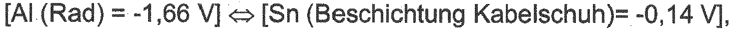 was einer Spannungsdifferenz von 1,52 V entspricht. Wird dagegen ein unverzinntes Kontaktelement der Strombrücke direkt an den aus einem Aluminiumwerkstoff bestehenden Abschnitt des Radinnenteils gesetzt, so gilt 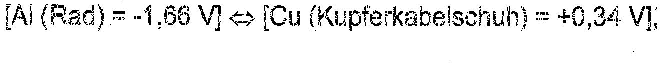 was eine Spannungsdifferenz von 2,0 V ergibt.

Die Potenzialdifferenzen sind hier somit so groß, dass es während der auch von Hybrid-Schienenrädern der hier in Rede stehenden Art geforderten Mindesteinsatzdauer von im Mittel fünf Jahren mit an Sicherheit grenzender Wahrscheinlichkeit zu Kontaktkorrosion kommen wird. Die damit einhergehende Schädigung insbesondere im Bereich des aus dem jeweiligen Leichtmetallwerkstoff bestehenden Abschnitts des Radinnenteils dürfte so beträchtlich sein, dass eine deutliche Erhöhung des Übergangswiderstands eintritt. Damit einhergehend muss aufgrund der hohen über die jeweilige Kontaktstelle fließenden Ströme im Fahrbetrieb mit einer starken Temperaturentwicklung gerechnet werden, in deren Folge die elastischen Elemente geschädigt werden könnten, über die der Radreifen auf dem Radinnenteil gestützt ist.

Vor diesem Hintergrund lag der Erfindung die Aufgabe zu Grunde, ein mehrteiliges Schienenrad zu schaffen, bei dem mit einfachen Mitteln die Gefahr der Entstehung von Kontaktkorrosion an einer Kontaktstelle gebannt ist, an der ein Kontaktelement der Strombrücke an einem aus einem Leichtmetallwerkstoff bestehenden Abschnitt des Radinnenteils anliegt.

Die Erfindung hat diese Aufgabe durch ein Schienenrad gelöst, das mindestens die in Anspruch 1 angegebenen Merkmale besitzt.

Vorteilhafte Ausgestaltungen der Erfindung sind in den abhängigen Ansprüchen angegeben und werden wie der allgemeine Erfindungsgedanke nachfolgend im Einzelnen erläutert.

Ein erfindungsgemäßes mehrteiliges Schienenrad für ein Schienenfahrzeug weist somit in Übereinstimmung mit dem eingangs erläuterten Stand der Technik einen Radreifen, ein Radinnenteil, mindestens einen zwischen dem Radreifen und dem Radinnenteil angeordneten, elektrisch isolierend wirkenden elastischen Körper, über den der Radreifen auf dem Radinnenteil abgestützt ist, und eine Strombrücke auf, die ein erstes Kontaktelement, das aus einem elektrisch leitfähigen Material besteht und mit einer Kontaktfläche am Radreifen anliegt, ein zweites Kontaktelement, das aus einem elektrisch leitfähigen Material besteht und mit seiner Kontaktfläche am Radinnenteil anliegt, und einen die Kontaktelemente verbindenden elektrischen Leiter umfasst, wobei das Radinnenteil mindestens in dem Bereich, in dem das dem Radinnenteil zugeordnete Kontaktelement der Strombrücke mit seiner Kontaktfläche an dem Radinnenteil anliegt, aus einem Leichtmetallwerkstoff besteht.

Erfindungsgemäß ist nun die Kontaktfläche des an dem Radinnenteil anliegenden Kontaktelements an einem aus korrosionsbeständigem, elektrisch leitendem Stahlwerkstoff bestehenden Abschnitt des Kontaktelements ausgebildet.

Indem erfindungsgemäß die Kontaktfläche an einem aus einem korrosionsbeständigen Stahl bestehenden Abschnitt des Kontaktelements gebildet ist, ist es praktisch ausgeschlossen, dass es im Bereich des Kontaktes zwischen dem aus Leichtmetallwerkstoff bestehenden Abschnitt des Radinnenteils und dem an ihm anliegenden Kontaktelement der jeweiligen Strombrücke zu Kontaktkorrosion kommt. Die Erfindung geht hierbei von der Erkenntnis aus, dass sich korrosionsbeständiger, nichtrostender Stahl trotz der bezogen auf einen Leichtmetallwerkstoff, insbesondere einen Aluminiumwerkstoff, relativ hohen Potenzialdifferenz für die erfindungsgemäßen Zwecke eignet, da sich an der Oberfläche von aus derartigen korrosionsbeständigen bestehenden Bauteilen eine oxidische Passivschicht bildet, die den darunter liegenden Stahlwerkstoff gegen korrosive Angriffe schützt. (Zu beachten ist, dass die Eigenschaftsbezeichnungen "nichtrostend" und "korrosionsbeständig" im vorliegenden Text synonym verwendet werden.)

Insbesondere eignen sich für die erfindungsgemäßen Zwecke demnach korrosionsbeständige, nicht rostende Stähle mit einem Chrom-Gehalt von mindestens 16,5 Gew.-% und einen Molybdän-Gehalt von mindestens 2,0 Gew.-%. Typische Vertreter solcher Stähle sind die unter den Werkstoffnummern 1.4401, 1.4404, 1.4571 in der Stahleisen-Liste geführten Stähle. Bei derart legierten Stählen bildet sich durch den jeweils hohen Chromanteil an der Kontaktfläche, mit der das jeweilige Kontaktelement an dem zugeordneten, aus Leichtmetall bestehenden Abschnitt des Radinnenteils anliegt, eine Passivschicht aus Chromoxid. Diese verhindert, dass es zu elektrolytischen Reaktionen zwischen der Kontaktfläche und der Oberfläche des anliegenden Leichtmetall-Abschnitts des Radinnenteils kommt. Durch die Zulegierung von Mo wird dabei der Edelstahl widerstandfähiger gegen Korrosion in chloridhaltiger Umgebung, wie sie beispielsweise auftritt, wenn im Winter die Straßen zur Vermeidung von Eisbildung mit Streuzahl bestreut sind.

Das dem Radreifen zugeordnete Kontaktelement kann beispielsweise einstückig aus einem Kupferwerkstoff, wie beispielsweise dem unter der Bezeichnung "Cu-HCP" bekannt und gemäß DIN EN 13600 legierten Werkstoff, hergestellt sein. Dagegen eignet sich für den die Kontaktfläche aufweisenden Abschnitt des dem Radinnenteil zugeordneten Kontaktelements beispielsweise besonders der unter der Bezeichnung "V4A" bekannte nichtrostende Edelstahl, wogegen der andere Teil des dem Radinnenteil zugeordneten Kontaktelements aus demselben hoch leitenden Cu-Werkstoff bestehen kann, wie das andere Kontaktelement.

Gemäß einer für die Praxis besonders wichtigen und gleichzeitig besonders kostengünstig herstellbaren Ausgestaltung besteht bei einem erfindungsgemäßen Schienenrad das an dem Radinnenteil anliegende Kontaktelement vollständig aus dem korrosionsbeständigen, elektrisch leitenden Stahlwerkstoff. In diesem Fall ist also das betreffende Kontaktelement beispielsweise in einem Stück aus dem korrosionsbeständigen Stahl gefertigt, so dass der die Kontaktfläche tragende Abschnitt des Kontaktelements einstückig mit dem restlichen Kontaktelement ausgebildet ist. Praktische Erprobungen haben ergeben, dass auch ein vollständig aus dem erfindungsgemäß vorgesehenen korrosionsbeständigen Stahl bestehendes Kontaktelement einen so geringen elektrischen Widerstand aufweist, dass die über die mit einem solchen Kontaktelement versehene Strombrücke auftretenden elektrischen Verluste für die Praxis ohne Weiteres akzeptabel sind.

Soll bei einem erfindungsgemäßen Schienenrad ein minimierter elektrischer Widerstand beim Übergang zwischen dem Radreifen und dem aus Leichtmetallwerkstoff bestehenden Abschnitt des Radinnenteils gewährleistet werden, so kann dies dadurch erreicht werden, dass das Kontaktelement, das dem aus einem Leichtmetallwerkstoff bestehenden Abschnitt des Radinnenteils zugeordnet ist, nicht vollständig aus dem korrosionsbeständigen Stahl gefertigt ist. Vielmehr ist in diesem Fall die Verwendung des nichtrostenden Stahls nur auf den Abschnitt beschränkt, an dem die Kontaktfläche ausgebildet ist, mit der das Kontaktelement der Strombrücke am aus Leichtmetallwerkstoff bestehenden Abschnitt des Radinnenteils anliegt. Auf diese Weise kann das dem Radinnenteil zugeordnete Kontaktelement so gestaltet werden, dass der Gesamtübergangswiderstand trotz der Verwendung des korrosionsbeständigen Stahls für seinen die Kontaktfläche tragenden Abschnitt minimal bleibt. Durch die Maßgabe, dass das dem Radinnenteil zugeordnete Kontaktelement mindestens zwei aus unterschiedlichen Werkstoffen bestehende Abschnitte aufweisen muss, hat die Erfindung hier berücksichtigt, dass der Gesamtübergangswiderstand der durch die erfindungsgemäß an der Außenseite eines gummigefederten Schienenrads vorgesehene Strombrücke nicht alleine durch den Übergangswiderstand zwischen dem Radinnenteil und dem zugeordneten Kontaktelement, sondern insbesondere auch durch den Übergangswiderstand zwischen dem elektrischen Leiter der Strombrücke und dem Kontaktelement bestimmt wird.

Gemäß einer vorteilhaften Ausgestaltung der Erfindung ist deshalb das dem Radinnenteil zugeordnete Kontaktelement mindestens in zwei Abschnitte geteilt, von denen der eine aus einem Werkstoff besteht, der im Hinblick auf eine maximale Korrosionsbeständigkeit im Bereich der mit dem Leichtmetallabschnitt des Radinnenteils in Kontakt kommenden Kontaktfläche optimiert ist, wogegen der andere Abschnitt im Hinblick auf einen minimalen Übergangswiderstand zwischen dem Kontaktelement und dem an ihn angeschlossenen elektrischen Leiter der Strombrücke ausgewählt werden kann.

Ein erfindungsgemäßes mehrteiliges gummigefedertes Schienenrad weist somit einen Radreifen auf, der typischerweise aus einem hierzu aus dem Stand der Technik bekannten Stahlwerkstoff besteht, wogegen sein Radinnenteil aus einem Leichtbauwerkstoff, insbesondere aus einem hierzu im Stand der Technik bereits ebenfalls schon bewährten Aluminiumwerkstoff gefertigt ist, wobei beispielsweise auch Werkstoffe auf Magnesium- oder Titanbasis in Frage kommen. Radreifen und Radinnenteil sind durch mindestens eine elektrisch leitende Strombrücke verbunden, bei der die durch das jeweilige Kontaktelement gebildete Anschlussstellen zum Radreifen aus einem elektrisch hochleitenden Material, beispielsweise aus Kupfer oder einer hierzu bereits bekannten Kupferlegierung, bestehen kann, wogegen die Anschlussstelle zum Radinnenteil an einem aus einem nicht rostenden Stahl bestehenden Abschnitt des jeweiligen Kontaktelements gebildet ist. Zwischen beiden Anschlussstellen befindet sich eine Litze aus einem elektrisch gut leitenden Material, vorzugsweise aus Kupfer oder einer hierzu bereits bekannten Kupferlegierung.

Durch den erfindungsgemäß bei der Strombrücke eines erfindungsgemäßen Schienenrads vorgesehenen Materialmix wird erreicht, dass die im Kontakt zwischen der an dem aus korrosionsbeständigem Stahl bestehenden Abschnitt des Kontaktelements und der zugeordneten Anlagefläche des aus Leichtmetallwerkstoff bestehenden Abschnitts des Radinnenteils bei hohen Stromstärken unvermeidbar auftretende Erwärmung aufgrund der guten Wärmeleitfähigkeit des elektrischen Leiters und der am Radreifen bestehenden Anschlussstelle in den Radreifen abgeführt wird und somit Überhitzungen der Strombrücke, insbesondere von deren elektrischem Leiter, vermieden werden. Durch die so gewährleistete Wärmeabfuhr wird zudem auch der temperaturbedingte Anstieg des Übergangswiderstands der Strombrücke reduziert. Auf diese Weise ist gewährleistet, dass die im Betrieb auftretenden Fahrströme auch bei ungünstigen Kontaktverhältnissen zwischen Rad und Schiene dauerhaft sicher übertragen werden. Gleiches gilt für die Übertragung von Signalströmen und desgleichen.

Den voranstehenden Erläuterungen entsprechend ist bei einer hinsichtlich der elektrischen Leitfähigkeit besonders effektiven Ausgestaltung eines erfindungsgemäßen Schienenrads das mit seiner Kontaktfläche an dem Radinnenteil anliegende Kontaktelement aus mindestens zwei Abschnitten zusammengesetzt, von denen der eine Abschnitt ein Verbindungsabschnitt ist, über den das Kontaktelement an den elektrischen Leiter angeschlossen ist, und von denen der andere Abschnitt ein aus dem korrosionsbeständigen Stahlwerkstoff bestehender Kontaktabschnitt ist, der elektrisch leitend mit dem Verbindungsabschnitt verbunden ist und an dem die an dem Radinnenteil anliegende Kontaktfläche ausgebildet ist.

Zu diesem Zweck kann beispielsweise der Verbindungsabschnitt an einer dem Radinnenteil zugeordneten Seite mit dem Kontaktabschnitt belegt sein. Zu diesem Zweck kann der Kontaktabschnitt scheiben- oder plattenförmig ausgebildet sein, wobei seine Dicke in diesem Fall typischerweise 0,5 - 2,0 mm beträgt.

Dabei ergeben sich aus den schon erläuterten Gründen optimal minimierte Übergangswiderstände, wenn der Verbindungsabschnitt aus einem Werkstoff besteht, der eine höhere elektrische Leitfähigkeit besitzt als der aus dem korrosionsbeständigen Stahl bestehende Kontaktabschnitt.

Der bei dieser Ausgestaltung der Erfindung dem an dem Radinnenteil anliegenden Kontaktelement erfindungsgemäß vorgesehene Materialmix aus einerseits hoch korrosionsbeständigem Stahl in dem Bereich, an dem die Kontaktfläche ausgebildet ist, und andererseits hoch leitfähigem Material in dem Bereich, in dem der Anschluss an den elektrischen Leiter der Strombrücke erfolgt, kann in jeder geeigneten Weise realisiert werden. Ziel ist dabei einerseits ein minimierter Übergangswiderstand zwischen den jeweils aufeinander treffenden Materialien und andererseits eine dauerhaft sichere Verbindung zwischen den Abschnitten des Kontaktelements.

Für die Herstellung eines erfindungsgemäß gestalteten Kontaktelements sind beispielsweise alle Verfahren denkbar, bei denen das nichtrostende Stahlmaterial des mit der Kontaktfläche versehenen Abschnitts an den mit dem elektrischen Leiter verbundenen Abschnitt des Kontaktelements stoffschlüssig angebunden wird. Hierzu zählen alle Verfahren, mit denen sich zwei separat vorgefertigte Abschnitte eines Bauteils stoffschlüssig und elektrisch leitend miteinander verbunden lassen, wie zum Beispiel durch Verschweißen oder Verlöten. Genauso ist die Anwendung additiver Verfahren, wie Auftragsschweißverfahren, pulvermetallurgische Verfahren, 3D-Drucken und desgleichen, denkbar.

Besonders einfach herstellbar und gleichzeitig für einen dauerhaften Einsatz in einer rauen Anwendungsumgebung geeignet sind, Schienenräder der hier in Rede stehenden mehrteiligen Art, bei denen der Verbindungsabschnitt und der Kontaktabschnitt getrennt voneinander aus dem jeweils für sie optimal geeigneten Material vorgefertigt und anschließend form- und erforderlichenfalls zusätzlich kraftschlüssig miteinander fest verbunden sind. Bei einer solchen vorzugweise ausschließlich formschlüssigen, jedenfalls aber nicht stoffschlüssigen Verbindung der beiden gemeinsam das jeweilige Kontaktelement bildenden Teile können die Kontaktelemente besonders preisgünstig hergestellt, gleichzeitig aber auch besonders gebrauchstauglich und dauerhaltbar miteinander verbunden werden.

Die formschlüssige Anbindung des aus dem nicht rostenden, korrosionsbeständigen Material bestehenden Abschnitts des jeweiligen Kontaktelements an dessen aus einem anderen, vorzugsweise einem besser elektrisch leitenden Material bestehenden Abschnitt kann dabei dadurch auf einfache Weise bewerkstelligt werden, dass in den Verbindungsabschnitt eine Durchgangsöffnung eingeformt ist und das Kontaktelement einen nach Art einer Hülse ausgebildeten, in der Durchgangsöffnung des Verbindungsabschnitts sitzenden Hülsenabschnitt aufweist, durch den ein Befestigungselement, wie eine Schraube, zum Befestigen des dem Radinnenteil zugeordneten Kontaktelements der Strombrücke an dem Radinnenteil geführt ist. Der Hülsenabschnitt kann bei dieser Ausgestaltung in die Öffnung des Verbindungsabschnitts eingepresst sein, um den dauerhaft sicheren Halt des aus dem nicht rostenden Material bestehenden Kontaktabschnitts an dem Verbindungsabschnitt zu gewährleisten. Gleichzeitig können im Bereich der Öffnung oder des sie umgebenden Randbereichs des Verbindungsabschnitts Hinterschnitte vorgesehen sein, an denen es zu einer formschlüssigen Verklammerung des verpressten Materials des einen Abschnitts mit dem Material des jeweils anderen Abschnitts des Kontaktelements kommt.

Eine andere Möglichkeit der dauerhaften Anbindung des aus dem nicht rostenden Werkstoff bestehenden Kontaktabschnitts an den Verbindungsabschnitt des dem Radinnenteil zugeordneten Kontaktelements besteht darin, dass der Verbindungsabschnitt zumindest abschnittsweise von dem Kontaktabschnitt ummantelt ist. So kann der Verbindungsabschnitt schuhförmig mit einem zungenartigen Vorsprung ausgebildet sein, um den der aus einem korrosionsbeständigen Stahl bestehende Kontaktabschnitt nach Art eines Mantels gelegt ist.

Die Befestigung der Kontaktelemente der mindestens einen bei einem erfindungsgemäßen Schienenrad vorgesehenen Strombrücke am Radreifen oder Radinnenteil des Schienenrads erfolgt vorzugsweise jeweils in an sich bekannter Weise mittels einer Schraubbefestigung pro Anschlussstelle. Die hierzu am Radinnenteil eingesetzten Schrauben können beispielsweise aus dem in der DIN EN ISO 3506 genormten Werkstoff A4 bestehen. Zur Vermeidung von Fehlmontagen können unterschiedliche Gewindedurchmesser am Radreifen und Radinnenteil und unterschiedlich große zugehörige Befestigungsbohrungen an den Kontaktelementen der Strombrücke vorgesehen werden.

Die Ankopplung des elektrischen Leiters an das jeweilige Kontaktelement kann durch an sich bekanntes Dornverpressen erfolgen.

Zur weiteren Optimierung des Schutzes gegen Kontaktkorrosion kann mindestens die an dem aus nicht rostendem Stahl bestehenden Abschnitt des dem Radinnenteil zugeordneten Kontaktelements vorgesehene Kontaktfläche mit einer metallischen Korrosionsschutzschicht beschichtet sein, die elektrisch leitfähig ist. Diese kann beispielsweise in konventioneller Weise aus Zink oder einer Zinklegierung gebildet werden. Die Schutzschicht kann sich dabei über das gesamte Kontaktelement ziehen, sollte jedoch den Bereich frei lassen, in dem der elektrische Leiter an das Kontaktelement angeschlossen ist. Optimalerweise beschränkt sich die zusätzliche Korrosionsschutzschicht auf den Bereich, in dem es zum elektrischen Kontakt zwischen dem Leichtmetallwerkstoff des zugeordneten Abschnitts des Radinnenteils und der Strombrücke kommt.

Wie erläutert, besteht bei einem erfindungsgemäßen Schienenrad mindestens der Abschnitt, an dem die Strombrücke mit ihrem zugeordneten Kontaktelement anliegt, aus einem Leichtmetallwerkstoff. Dabei kann das Radinnenteil aus mehreren Teilen zusammengesetzt sein, von denen dann aber mindestens der Teil, an dem das zugeordnete Kontaktelement der Strombrücke an dem Radinnenteil anliegt, aus einem Leichtmetallwerkstoff besteht. Dies beinhaltet selbstverständlich die Möglichkeit, dass das Radinnenteil unabhängig davon, ob es in einem Stück hergestellt oder aus mindestens zwei Einzelteilen zusammengesetzt ist, jeweils vollständig aus einem geeigneten, aus dem Stand der Technik hierzu bekannten Leichtmetallwerkstoff besteht.

Als Leichtmetallwerkstoffe, aus denen in diesem Sinne mindestens der besagte mit der Strombrücke direkt in Kontakt kommende Abschnitt des Radinnenteils besteht, eignen sich, wie schon erwähnt, insbesondere ein hierzu bekannter Aluminiumwerkstoff, aber auch Leichtmetallwerkstoffe beispielsweise auf Magnesium- oder Titanbasis.

Nachfolgend wird die Erfindung anhand einer ein Ausführungsbeispiel darstellenden Zeichnung näher erläutert. Es zeigen jeweils schematisch:
- Fig. 1: einen Ausschnitt eines mehrteiligen Schienenrads in frontaler Ansicht;
- Fig. 2: das Schienenrad gemäß Fig. 1 in einem Schnitt entlang der in Fig. 1 eingezeichneten Schnittlinie X-X;
- Fig. 3: eine erste Variante einer Strombrücke im nicht montierten Zustand in seitlicher Ansicht;
- Fig. 4: einen Ausschnitt der Strombrücke gemäß Fig. 3 in einer vergrößerten, teilgeschnittenen Ansicht;
- Fig. 5: die Strombrücke gemäß Fig. 3 und 4 im für die Montage vorgeformten Zustand;
- Fig. 6: eine zweite Variante einer Strombrücke im nicht montierten Zustand in seitlicher Ansicht;
- Fig. 7: einen Ausschnitt der Strombrücke gemäß Fig. 6 in einer vergrößerten, teilgeschnittenen Ansicht;
- Fig. 8: die Strombrücke gemäß den Figuren 6 und 7 in einer frontalen Ansicht;
- Fig. 9: einen Ausschnitt einer alternativen Ausgestaltung einer Strombrücke in einer der Fig. 7 entsprechenden Ansicht;
- Fig. 10: die Strombrücke gemäß Fig. 9 in einer frontalen Ansicht.

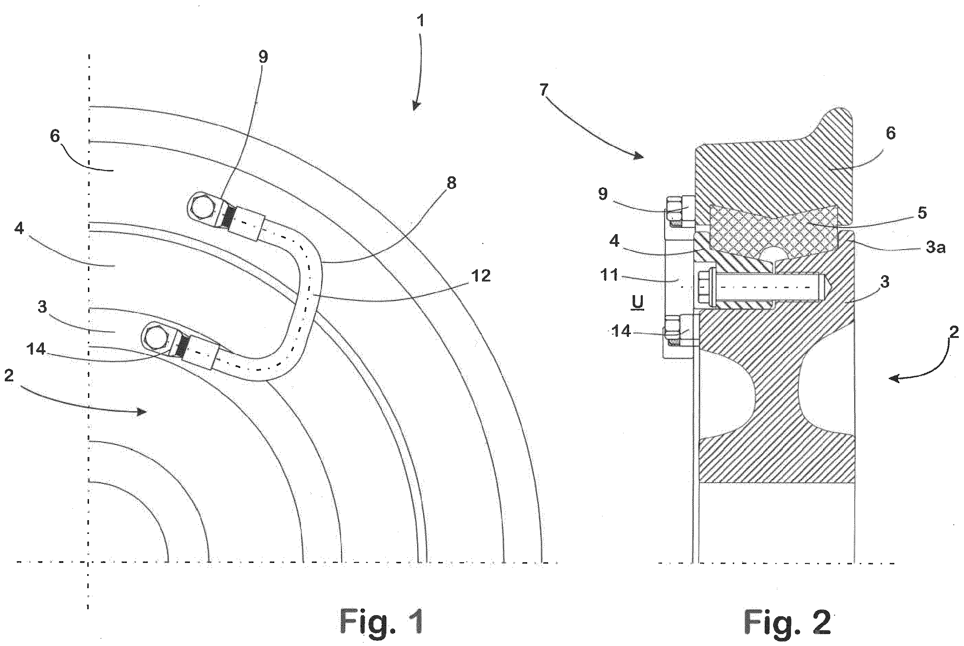

Das in Fig. 1 nur zu einem Viertel gezeigte Schienenrad 1 umfasst ein Radinnenteil 2, das in bekannter Weise aus einer Radfelge 3 und einem Spannring 4 zusammengesetzt ist. Die Radfelge 3 ist aus einem hierfür bekannten Aluminiumwerkstoff hergestellt, wogegen der Spannring 4 aus einem hierzu ebenfalls bekannten höherfesten Werkstoff bestehen kann.

Das Schienenrad 1 umfasst des Weiteren einen ringförmigen elastischen Körper 5, der auf dem Außenumfang der Radfelge 3 des Radinnenteils 2 angeordnet ist, einen Radreifen 6, der mit seiner Innenumfangsfläche auf dem elastischen Körper 5 sitzt und auf diese Weise in radialer Richtung des Schienenrads 1 elastisch auf der Radfelge 3 des Radinnenteils 2 abgestützt ist. Der Spannring 4 ist dabei von der einen Stirnseite 7 des Schienenrads 1 her mittels Spannschrauben in axialer Richtung gegen die Radfelge 3 des Radinnenteils 2 und den elastischen Körper 5 verspannt. Da der elastische Körper 5 gleichzeitig auf seiner zum Spannring 4 gegenüberliegenden Seite an einem umlaufenden Absatz 3a der Radfelge 3 des Radinnenteils 2 abgestützt ist, nimmt mit zunehmender axialer Verspannung des Spannrings 4 die Pressung zwischen dem elastischen Körper 5 einerseits und dem Radreifen 6 sowie der Radfelge 3 des Radinnenteils 2 andererseits zu.

An der Stirnseite 7 des Schienenrads 1 ist eine Strombrücke 8 befestigt, die den aus geeignetem hochbelastbarem Stahlwerkstoff bestehenden Radreifen 6 mit der aus Aluminiumwerkstoff bestehenden Radfelge 3 des Radinnenteils 2 elektrisch verbindet.

Die Strombrücke 8 umfasst hierzu ein erstes aus einem für diese Zwecke bekannten Kupferwerkstoff bestehendes Kontaktelement 9 auf, das in konventioneller Weise einstückig nach Art eines normgemäßen Kabelschuhs ausgebildet ist und an seiner flachen Seite eine Kontaktfläche 10 aufweist, mit der es an der zugeordneten Stirnfläche des Radreifens 6 anliegt. Durch die in das Kontaktelement 9 eingebrachte Durchgangsöffnung ist in bekannter Weise eine normgemäße Schraube geführt, die in eine in den Radreifen 6 eingeformte, hier nicht sichtbare Gewindebohrung eingeschraubt ist.

Das erste Kontaktelement 9 der Strombrücke 8 ist in bekannter Weise mit dem einen Ende einer als elektrischer Leiter 11 der Strombrücke 8 dienenden Kupferlitze 12 elektrisch leitend fest verkoppelt, die mit einer ausreichend dicken Isolierschicht 13 gegenüber der Umgebung U der Strombrücke 8 abgeschirmt ist.

An das andere Ende der Kupferlitze 12 des elektrischen Leiters 11 ist ein zweites Kontaktelement 14 angeschlossen, über das der elektrische Kontakt zur Radfelge 3 des Radinnenteils 2 hergestellt ist. Erfindungsgemäß weist dieses dem Radinnenteil 2 zugeordnete, in seiner äußeren und funktionalen Gestaltung ebenfalls einem konventionellen, normgemäßen Kabelschuh entsprechende zweite Kontaktelement 14 einen Verbindungsabschnitt 15 auf, der einerseits einen Anschlussbereich 16, an dem das zugeordnete Ende der Kupferlitze 12 anliegt, und andererseits einen zungenartigen, von der Kupferlitze 12 weg gerichteten Vorsprung 17 besitzt. In diesen ist eine von seiner Ober- bis zu seiner Unterseite führende Durchgangsöffnung eingeformt, durch die im Gebrauch eine Befestigungsschraube für die Befestigung des zweiten Kontaktelements 14 am Radinnenteil 2 geführt werden kann.

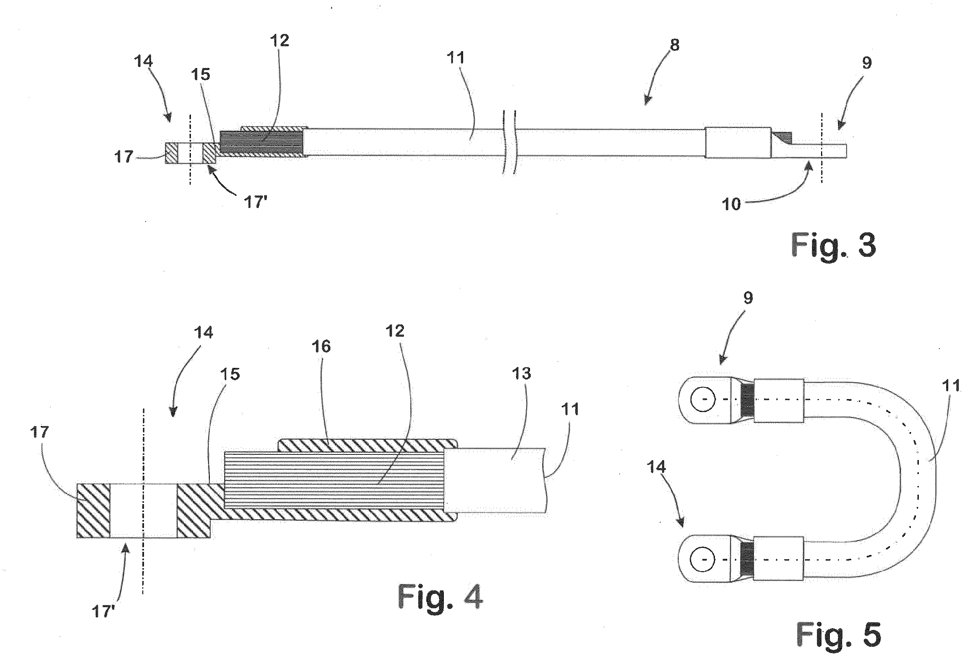

Bei der in den Figuren 3 und 4 gezeigten Ausgestaltung der Erfindung ist das dem Radinnenteil 2 zugeordnete zweite Kontaktelement 14 in einem Stück beispielsweise durch Schmieden aus einem nichtrostenden Stahl gefertigt. Dabei bildet der Vorsprung 17 mit der an seiner Unterseite ausgebildeten ebenen Anlagefläche den aus dem nicht rostenden Werkstoff bestehenden Abschnitt, an dem erfindungsgemäß die Kontaktfläche 17' ausgebildet ist, mit der das zweite Kontaktelement 14 im Gebrauch an der zugeordneten Fläche des aus Leichtmetallwerkstoff bestehenden Abschnitts des Radinnenteils 2 anliegt.

Bei den in den Figuren 5 - 10 dargestellten Varianten der Strombrücke 8 ist dagegen das dem Radinnenteil 2 zugeordnete zweite Kontaktelement 14 aus zwei Abschnitten zusammengesetzt. So besteht hier der Vorsprung 17 des zweiten Kontaktelements 14 wie das erste Kontaktelement 9 aus einem elektrisch hoch leitfähigen Kupferwerkstoff.

Bei der in den Figuren 5 - 8 dargestellten Variante ist in den Vorsprung 17 des zweiten Kontaktelements 14 ebenfalls eine von dessen Oberseite 18 zu dessen eben ausgebildeter Unterseite 19 führende Durchgangsöffnung 20 eingeformt, die sich ausgehend von ihrem der Unterseite 19 zugeordneten Mündungsbereich in Richtung der Oberseite 18 des Vorsprungs 17 trichterförmig erweitert.

An der Unterseite 19 liegt ein separat von dem Verbindungsabschnitt 15 aus einem nicht rostenden Stahlwerkstoff hergestellter Kontaktabschnitt 21 an. Der Kontaktabschnitt 21 ist dabei nach Art einer Unterlegscheibe oder -platte mit einer Dicke von beispielsweise 1 mm so geformt, dass er die eben ausgebildete Unterseite 19 des Vorsprungs 17 des Verbindungsabschnitts 15 vollständig bedeckt. An seiner der Unterseite 19 des Verbindungsabschnitts 15 zugeordneten Oberseite trägt der Kontaktabschnitt 21 einen in einem Stück mit ihm hergestellten Hülsenabschnitt 22, der in die Durchgangsöffnung 20 des Verbindungsabschnitts 15 eingeschoben und anschließend so in der Durchgangsöffnung 20 verpresst worden ist, dass die Durchgangsöffnung 20 mit Material des Kontaktabschnitts 21 gefüllt und nur noch eine von dem Hülsenabschnitt 22 umgebene zylindrische Durchgangsöffnung 23 verblieben ist. Durch die Verpressung einerseits und durch den im Bereich der trichterförmig sich erweiternden Durchgangsöffnung 20 des Verbindungsabschnitts 15 gebildeten Hinterschnitts andererseits ist der Kontaktabschnitt 21 form- und kraftschlüssig dicht und fest am Verbindungsabschnitt 15 gehalten, so dass eine elektrisch einwandfreie Verbindung zwischen den Abschnitten 15 und 21 des Kontaktelements 14 hergestellt ist.

An der freien Unterseite seines aus korrosionsbeständigem Stahlwerkstoff bestehenden Kontaktabschnitts 21 weist das Kontaktelement 14 eine Kontaktfläche 24 auf, mit der es im Gebrauch flach an der zugeordneten Stirnseite 7 der aus Aluminiumwerkstoff bestehenden Radfelge 3 des Schienenrads 1 anliegt.

Durch die Durchgangsöffnung 23 des Kontaktabschnitts 14 ist im fertig montierten Zustand eine konventionelle, normgerechte Schraube gesteckt, die zur Fixierung des Kontaktelements 14 an der zugeordneten Anlagefläche an der Stirnseite 7 der Radfelge 3 des Radinnenteils 2 in eine dort vorgesehene, hier nicht sichtbare Gewindebohrung eingeschraubt ist.

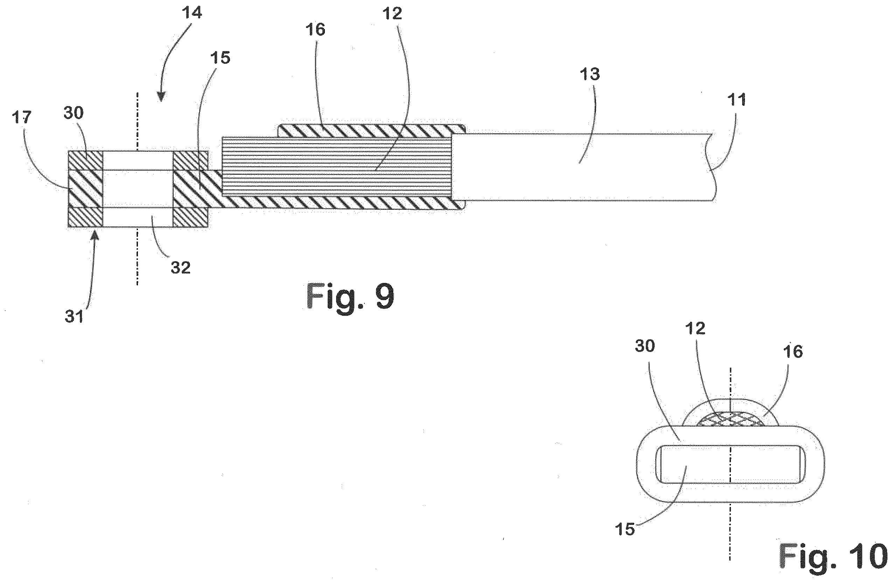

Bei der in den Figuren 9 und 10 dargestellten Variante ist im Unterschied zu der in den Figuren 5 - 8 dargestellten Ausgestaltung um den Vorsprung 17 des der Radfelge 3 des Radinnenteils 2 zugeordneten zweiten Kontaktelements 14 der Strombrücke 8 ein ebenfalls separat vorgefertigter, hier jedoch nach Art einer Hülse geformter Kontaktabschnitt 30 aufgeschoben und so verpresst worden, dass einerseits an der Unterseite des Kontaktelements 14 ebenfalls eine ebene Kontaktfläche 31 vorhanden ist, mit der das Kontaktelement 14 im Gebrauch flach an der zugeordneten Stirnseite 7 der aus Aluminiumwerkstoff bestehenden Radfelge 3 des Schienenrads 1 anliegt, und anderseits der Vorsprung 17 von dem Kontaktabschnitt 30 ummantelt ist.

Durch den Kontaktabschnitt 30 und den Vorsprung 17 ist eine Durchgangsöffnung 32 geführt. Durch die Durchgangsöffnung 32 ist eine konventionelle, normgerechte Schraube gesteckt, die zur Fixierung des Kontaktelements 14 an der zugeordneten Anlagefläche an der Stirnseite 7 der Radfelge 3 des Radinnenteils 2 in eine dort vorgesehene, hier nicht sichtbare Gewindebohrung eingeschraubt ist.

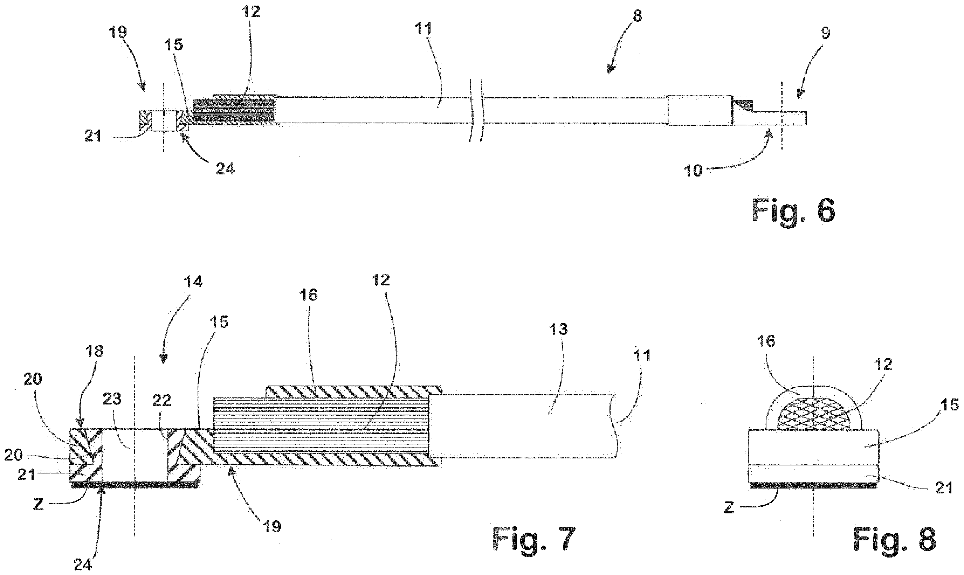

Zur Optimierung des Schutzes gegen die Bildung von Korrosion in dem Bereich, in dem das jeweilige erste Kontaktelement 9 mit seiner Kontaktfläche 10 und das jeweilige zweite Kontaktelement 14 mit seiner jeweiligen Kontaktfläche 17', 24, 31 flach an der zugeordneten Stirnseite 7 anliegt, können die Kontaktflächen 10, 17', 24, 31, wie in den Figuren 7 und 8 jeweils angedeutet, mit einer Zinkbeschichtung Z belegt sein.

### BEZUGSZEICHEN

- 1: Schienenrad
- 2: Radinnenteil
- 3: Radfelge (Bereich, an dem das Kontaktelement 14 anliegt)
- 3a: umlaufender Absatz der Radfelge 3
- 4: Spannring
- 5: elastischer Körper
- 6: Radreifen
- 7: Stirnseite des Schienenrads 1, seines Radreifens 6 sowie seiner Radfelge 3
- 8: Strombrücke
- 9: dem Radreifen 6 zugeordnetes Kontaktelement der Strombrücke 8
- 10: Kontaktfläche des Kontaktelements 9
- 11: elektrischer Leiter der Strombrücke 8
- 12: Kupferlitze des elektrischen Leiters 11
- 13: Isolierschicht des elektrischen Leiters 11
- 14: der Radfelge 3 des Radinnenteils 2 zugeordnetes zweites Kontaktelement
- 15: Verbindungsabschnitt des Kontaktelements 14
- 16: Anschlussbereich des Verbindungsabschnitts 15
- 17: Vorsprung des Verbindungsabschnitts 15
- 17': Kontaktfläche des Kontaktelements 14 (Figuren 3, 4)
- 18: Oberseite des Vorsprungs 17
- 19: Unterseite des Vorsprungs 17
- 20: trichterförmige Durchgangsöffnung des Vorsprungs 17
- 21: Kontaktabschnitt des Kontaktelements 14
- 22: Hülsenabschnitt des Kontaktabschnitts 21
- 23: Durchgangsöffnung des Kontaktelements 14
- 24: Kontaktfläche des Kontaktelements 14 (Figuren 5 - 8)
- 30: Kontaktabschnitt
- 31: Kontaktfläche des Kontaktabschnitts 30 (Figuren 9, 10)
- 32: Durchgangsöffnung
- U: Umgebung der Strombrücke 8
- Z: Zinkbeschichtung

## Patentansprüche

1. Mehrteiliges Schienenrad für ein Schienenfahrzeug mit einem Radreifen (6), mit einem Radinnenteil (2), mit mindestens einem zwischen dem Radreifen (6) und dem Radinnenteil (2) angeordneten, elektrisch isolierend wirkenden elastischen Körper (5), über den der Radreifen (6) auf dem Radinnenteil (2) abgestützt ist, und mit einer an einer außen liegenden Stirnseite (7) des Schienenrads (1) montierten Strombrücke (8), die ein erstes Kontaktelement (9), das aus einem elektrisch leitfähigen Material besteht und mit einer Kontaktfläche (10) am Radreifen (6) anliegt, ein zweites Kontaktelement (14), das aus einem elektrisch leitfähigen Material besteht und mit seiner Kontaktfläche (24) am Radinnenteil (2) anliegt, und einen die Kontaktelemente (9,14) verbindenden elektrischen Leiter (11) umfasst , **dadurch gekennzeichnet, dass** das Radinnenteil (2) mindestens in dem Bereich (3), in dem das dem Radinnenteil (2) zugeordnete Kontaktelement (14) der Strombrücke (8) mit seiner Kontaktfläche (24) an dem Radinnenteil (2) anliegt, aus einem Leichtmetallwerkstoff besteht, wobei die Kontaktfläche (17', 24, 31) des an dem Radinnenteil (2) anliegenden Kontaktelements (14) an einem aus korrosionsbeständigem, elektrisch leitendem Stahlwerkstoff bestehenden Abschnitt (17,21,30) des Kontaktelements (14) ausgebildet ist.

2. Schienenrad nach Anspruch 1, **dadurch gekennzeichnet, dass** das an dem Radinnenteil (2) anliegende Kontaktelement (14) vollständig aus dem korrosionsbeständigen, elektrisch leitenden Stahlwerkstoff besteht.

3. Schienenrad nach Anspruch 1, **dadurch gekennzeichnet, dass** das mit seiner Kontaktfläche (24,31) an dem Radinnenteil (2) anliegende Kontaktelement (14) aus mindestens zwei Abschnitten zusammengesetzt ist, von denen der eine Abschnitt ein Verbindungsabschnitt (15) ist, über den das Kontaktelement (14) an den elektrischen Leiter (11) angeschlossen ist, und von denen der andere Abschnitt ein aus dem korrosionsbeständigen Stahlwerkstoff bestehender Kontaktabschnitt (21) ist, der elektrisch leitend mit dem Verbindungsabschnitt (15) verbunden ist und an dem die an dem Radinnenteil (2) anliegende Kontaktfläche (24) ausgebildet ist.

4. Schienenrad nach Anspruch 3, **dadurch gekennzeichnet, dass** der Verbindungsabschnitt (15) aus einem Werkstoff besteht, der eine höhere elektrische Leitfähigkeit besitzt als der aus dem korrosionsbeständigen Stahl bestehende Kontaktabschnitt (21).

5. Schienenrad nach einem der Ansprüche 3 oder 4, **dadurch gekennzeichnet, dass** der Verbindungsabschnitt (15) an einer dem Radinnenteil (2) zugeordneten Seite mit dem Kontaktabschnitt (21) belegt ist.

6. Schienenrad nach einem der Ansprüche 3 - 5, **dadurch gekennzeichnet, dass** der Verbindungabschnitt (15) und der Kontaktabschnitt (21) durch Formschluss, der optional durch einen Kraftschluss ergänzt ist, fest miteinander verbunden sind.

7. Schienenrad nach einem der Ansprüche 3 - 6, **dadurch gekennzeichnet, dass** in den Verbindungsabschnitt (15) eine Durchgangsöffnung (20) eingeformt ist und **dass** der Kontaktabschnitt (21) einen nach Art einer Hülse ausgebildeten, in der Durchgangsöffnung (20) des Verbindungsabschnitts (15) sitzenden Hülsenabschnitt (22) aufweist, durch den ein Befestigungselement zum Befestigen des dem Radinnenteil (2) zugeordneten Kontaktelements (14) der Strombrücke (8) an dem Radinnenteil (2) geführt ist.

8. Schienenrad nach einem der Ansprüche 3 - 7, **dadurch gekennzeichnet, dass** der Kontaktabschnitt (30) den Verbindungsabschnitt (15) zumindest abschnittsweise ummantelt.

9. Schienenrad nach einem der Ansprüche 3 - 8, **dadurch gekennzeichnet, dass** der Verbindungsabschnitt (15) aus einem Kupferwerkstoff besteht.

10. Schienenrad nach einem der voranstehenden Ansprüche, **dadurch gekennzeichnet, dass** der korrosionsbeständige Stahl, aus dem der die Kontaktfläche (24,31) aufweisende Abschnitt (21,30) des dem Radinnenteil (2) zugeordneten Kontaktelements der Strombrücke (8) besteht, einen Cr-Gehalt von mindestens 16,5 Gew.-% und einen Mo-Gehalt von mindestens 2,0 Gew.-% aufweist.

11. Schienenrad nach einem der voranstehenden Ansprüche, **dadurch gekennzeichnet, dass** das an dem Radreifen (6) anliegende Kontaktelement (9) vollständig aus einem Werkstoff besteht, der höhere elektrische Leitfähigkeit besitzt als der nichtrostende Stahl, aus dem der die Kontaktfläche (24,31) aufweisende Abschnitt (21,30) des dem Radinnenteil (2) zugeordneten Kontaktelements (14) besteht.

12. Schienenrad nach einem der voranstehenden Ansprüche, **dadurch gekennzeichnet, dass** mindestens das an dem Radinnenteil (2) anliegende Kontaktelement (14) mindestens im Bereich seiner Kontaktfläche (24,31) mit einer vor Korrosion schützenden, elektrisch leitfähigen Beschichtung (Z) belegt ist.

13. Schienenrad nach Anspruch 12, **dadurch gekennzeichnet, dass** die Beschichtung (Z) aus einem metallischen Werkstoff besteht.

14. Schienenrad nach Anspruch 13, **dadurch gekennzeichnet, dass** die Beschichtung (Z) aus einem Zinkwerkstoff gebildet ist.

15. Schienenrad nach einem der voranstehenden Ansprüche, **dadurch gekennzeichnet, dass** das Radinnenteil (2) in dem Bereich, in dem das zugeordnete Kontaktelement (14) der Strombrücke (8) an ihm anliegt, aus einem Aluminium-, einem Magnesium- oder einem Titanwerkstoff besteht.

16. Schienenrad nach einem der voranstehenden Ansprüche, **dadurch gekennzeichnet, dass** das Radinnenteil (2) aus mehreren Teilen zusammengesetzt ist, von denen mindestens der Teil, an dem das zugeordnete Kontaktelement der Strombrücke (8) an dem Radinnenteil (2) anliegt, aus einem Leichtmetallwerkstoff besteht.

## Claims

1. Multi-part rail wheel for a rail vehicle with a wheel tyre (6), with a wheel inner part (2), with at least one electrically insulating elastic body (5) arranged between the wheel tyre (6) and the wheel inner part (2), via which the wheel tyre (6) is supported on the wheel inner part (2) and with a current bridge (8), which is mounted on an outer end face (7) of the rail wheel (1) and which comprises a first contact element (9) consisting of an electrically conductive material and resting with a contact surface (10) on the wheel tyre (6), a second contact element (14) consisting of an electrically conductive material and resting with its contact surface (24) on the wheel inner part (2) and an electrical conductor (11) connecting the contact elements (9, 14), **characterised in that** the wheel inner part (2) at least in the region (3), in which the contact element (14) of the current bridge (8) assigned to the wheel inner part (2) rests with its contact surface (24) on the wheel inner part (2), consists of a light metal material, wherein the contact surface (17', 24, 31) of the contact element (14) resting on the wheel inner part (2) is formed on a section (17, 21, 30) of the contact element (14) consisting of corrosion-resistant, electrically conductive steel material

2. Rail wheel according to claim 1, **characterised in that** the contact element (14) resting on the wheel inner part (2) consists entirely of the corrosion-resistant, electrically conductive steel material.

3. Rail wheel according to claim 1, **characterised in that** the contact element (14) resting with its contact surface (24, 31) on the wheel inner part (2) is composed of at least two sections, of which one section is a connecting section (15), via which the contact element (14) is connected to the electrical conductor (11), and of which the other section is a contact section (21) consisting of the corrosion-resistant steel material, which is electrically conductively connected to the connecting section (15) and on which the contact surface (24) resting on the wheel inner part (2) is formed.

4. Rail wheel according to claim 3, **characterised in that** the connecting section (15) consists of a material which has a higher electrical conductivity than the contact section (21) consisting of the corrosion-resistant steel.

5. Rail wheel according to any one of claims 3 or 4, **characterised in that** the connecting section (15) is covered with the contact section (21) on a side assigned to the wheel inner part (2).

6. Rail wheel according to any one of claims 3 - 5, **characterised in that** the connecting section (15) and the contact section (21) are firmly connected to one another by positive-locking connection, which is optionally supplemented by a force-fitting connection.

7. Rail wheel according to any one of claims 3 - 6, **characterised in that** a through-hole (20) is formed into the connecting section (15) and **in that** the contact section (21) has a sleeve section (22) formed in the manner of a sleeve and seated in the through-hole (20) of the connecting section (15) through which is guided a fastening element for fastening the contact element (14) of the current bridge (8), which is assigned to the wheel inner part (2), to the wheel inner part (2).

8. Rail wheel according to any one of claims 3 - 7, **characterised in that** the contact section (30) encases the connecting section (15) at least in sections.

9. Rail wheel according to any one of claims 3 - 8, **characterised in that** the connecting section (15) consists of a copper material.

10. Rail wheel according to any one of the preceding claims, **characterised in that** the corrosion-resistant steel, of which consists the section (21, 30), comprising the contact surface (24, 31), of the contact element of the current bridge (8) assigned to the wheel inner part (2), has a Cr content of at least 16.5% by weight and a Mo content of at least 2.0% by weight.

11. Rail wheel according to any one of the preceding claims, **characterised in that** the contact element (9) resting on the wheel tyre (6) consists entirely of a material which has higher electrical conductivity than the stainless steel of which consists the section (21, 30), comprising the contact surface (24, 31), of the contact element (14) assigned to the wheel inner part (2).

12. Rail wheel according to any one of the preceding claims, **characterised in that** at least the contact element (14) resting on the wheel inner part (2) is covered with an electrically conductive coating (Z), which protects against corrosion, at least in the region of its contact surface (24, 31).

13. Rail wheel according to claim 12, **characterised in that** the coating (Z) consists of a metallic material.

14. Rail wheel according to claim 13, **characterised in that** the coating (Z) is formed from a zinc material.

15. Rail wheel according to any one of the preceding claims, **characterised in that** the wheel inner part (2) consists of an aluminium, a magnesium or a titanium material in the region in which the assigned contact element (14) of the current bridge (8) rests on it.

16. Rail wheel according to any one of the preceding claims, **characterised in that** the wheel inner part (2) is composed of a plurality of parts, of which at least the part, on which the assigned contact element of the current bridge (8) rests on the wheel inner part (2), consists of a light metal material.

## Revendications

1. Roue ferroviaire en plusieurs parties pour un véhicule sur rails comprenant un bandage (6), une partie intérieure (2) de roue, au moins un corps (5) élastique ayant une action isolante électriquement, disposé entre le bandage (6) et la partie intérieure (2) de roue, par l'intermédiaire duquel le bandage (6) est soutenu sur la partie intérieure (2) de roue, et un pont à courant (8) monté sur un côté frontal (7), situé côté extérieur, de la roue ferroviaire (1), qui comprend un premier élément de contact (9) qui est constitué d'un matériau électriquement conducteur et repose sur le bandage (6) par une surface de contact (10), un deuxième élément de contact (14) qui est constitué d'un matériau électriquement conducteur et repose par sa surface de contact (24) sur la partie intérieure (2) de roue, et un conducteur (11) électrique reliant les éléments de contact (9, 14), **caractérisée en ce que** la partie intérieure (2) de roue est constituée d'un matériau en métal léger au moins dans la zone (3) dans laquelle l'élément de contact (14) associé à la partie intérieure (2) de roue du pont à courant (8) repose par sa surface de contact (24) sur la partie intérieure (2) de roue, les surfaces de contact (17', 24, 31) de l'élément de contact (14) reposant sur la partie intérieure (2) de roue étant formée sur une section (17, 21, 30), constitué d'un matériau en acier électriquement conducteur résistant à la corrosion, de l'élément de contact (14).

2. Roue ferroviaire selon la revendication 1, **caractérisée en ce que** l'élément de contact (14) reposant sur la partie intérieure (2) de roue est intégralement constitué d'un matériau en acier électriquement conducteur résistant à la corrosion.

3. Roue ferroviaire selon la revendication 1, **caractérisée en ce que** l'élément de contact (14) reposant par sa surface de contact (24, 31) sur la partie intérieure (2) de roue est constitué d'au moins deux sections, l'une d'entre elles étant une section de raccordement (15) grâce à laquelle l'élément de contact (14) est raccordé au conducteur électrique (11), et l'autre section étant une section de contact (21) se composant d'un matériau en acier résistant à la corrosion, laquelle est reliée électriquement à la section de raccordement (15) et sur laquelle est conçue la surface de contact (24) reposant sur la partie intérieure (2) de roue.

4. Roue ferroviaire selon la revendication 3, **caractérisée en ce que** la section de raccordement (15) est constituée d'un matériau présentant une conductivité électrique supérieure à celle de la section de contact (21) en acier résistant à la corrosion.

5. Roue ferroviaire selon l'une des revendications 3 ou 4, **caractérisée en ce que** la section de raccordement (15) est revêtue par la section de contact (21) sur un côté associé à la partie intérieure (2) de roue.

6. Roue ferroviaire selon l'une des revendications 3 à 5, **caractérisée en ce que** la section de raccordement (15) et la section de contact (21) sont fermement reliées l'une à l'autre par liaison de forme, ou complété, au choix, par liaison de force.

7. Roue ferroviaire selon l'une des revendications 3 à 6, **caractérisée en ce qu'**une ouverture de passage (20) est intégrée dans la section de raccordement (15) et **en ce que** la section de contact (21) présente une section de douille (22), conçue en tant que douille et étant logée dans l'ouverture de passage (20) de la section de raccordement (15), à travers laquelle un élément de fixation est guidé pour la fixation de l'élément de contact (14) du pont à contact (8), associé à la partie intérieure (2) de roue, sur la partie intérieure (2) de roue.

8. Roue ferroviaire selon l'une des revendications 3 à 7, **caractérisée en ce que** la section de contact (30) enveloppe, au moins partiellement, la section de raccordement (15).

9. Roue ferroviaire selon l'une des revendications 3 à 8, **caractérisée en ce que** la section de raccordement (15) se compose d'un matériau en cuivre.

10. Roue ferroviaire selon l'une des revendications précédentes, **caractérisée en ce que** l'acier résistant à la corrosion, dont se compose la section (21, 30), présentant la surface de contact (24, 31), de l'élément de contact du pont à courant (8), associé à la partie intérieure (2) de roue, présente une teneur en Cr d'au moins 16,5 % en poids et une teneur en Mo d'au moins 2,0 % en poids.

11. Roue ferroviaire selon l'une des revendications précédentes, **caractérisée en ce que** l'élément de contact (9) reposant sur le bandage (6) est intégralement constitué d'un matériau présentant une conductivité électrique supérieure à celle de l'acier inoxydable, dont se compose la section (21, 30), présentant la surface de contact (24, 31), de l'élément de contact (14) associé à la partie intérieure (2) de roue.

12. Roue ferroviaire selon l'une des revendications précédentes, **caractérisée en ce qu'**au moins l'élément de contact (14) reposant sur la partie intérieure (2) de roue est revêtu, au moins dans la zone de sa surface de contact (24, 31), d'un revêtement (Z) électriquement conducteur et anticorrosion.

13. Roue ferroviaire selon la revendication 12, **caractérisée en ce que** le revêtement (Z) se compose d'un matériau métallique.

14. Roue ferroviaire selon la revendication 13, **caractérisée en ce que** le revêtement (Z) se compose d'un matériau en zinc.

15. Roue ferroviaire selon l'une des revendications précédentes, **caractérisée en ce que** la partie intérieure (2) de roue se compose d'un matériau en aluminium, en magnésium ou en titane dans la zone où l'élément de contact (14) associé du pont à courant (8) repose sur celle-ci.

16. Roue ferroviaire selon l'une des revendications précédentes, **caractérisée en ce que** la partie intérieure (2) de roue est constituée de plusieurs pièces, dont au moins la pièce sur laquelle l'élément de contact associé du pont à courant (8) repose sur la partie intérieure (2) de roue, est en alliage léger.
